# EUROPÄISCHE PATENTSCHRIFT

(11) **EP 1 116 369 B1**
(45) Veröffentlichungstag und Bekanntmachung des Hinweises auf die Patenterteilung: **04.08.2004**
(21) Anmeldenummer: 99955715.0
(22) Anmeldetag: 15.09.1999
(51) Int. Cl.: H04L 29/06, H04Q 3/00

(54) **VERFAHREN ZUM AUSTAUSCH VON SIGNALISIERUNGSINFORMATIONEN FÜR WENIGSTENS EINE ÜBER EIN PAKETVERMITTELNDES NETZ VERMITTELBARE GESPRÄCHSVERBINDUNG**
METHOD FOR EXCHANGING SIGNALLING INFORMATION FOR AT LEAST ONE CALL THAT CAN BE SWITCHED VIA A PACKET SWITCHING NETWORK
PROCEDE PERMETTANT D'ECHANGER DES INFORMATIONS DE SIGNALISATION DESTINE A AU MOINS UNE COMMUNICATION POUVANT ETRE COMMUTEE PAR UN RESEAU A COMMUTATION DE PAQUETS

(30) Priorität: 24.09.1998 DE 19843881
(43) Veröffentlichungstag der Anmeldung: 18.07.2001
(73) Patentinhaber: SIEMENS AKTIENGESELLSCHAFT, 80333 München (DE)
(72) Erfinder: LANGE, Thomas, D-84034 Landshut (DE); UNGRUH, Joachim, D-80638 München (DE)
(86) Internationale Anmeldenummer: PCT/DE1999/002935
(87) Internationale Veröffentlichungsnummer: WO 2000/018176

(56) Entgegenhaltungen:
- WO-A-97/38551
- SCHOEN U ET AL: "CONVERGENCE BETWEEN PUBLIC SWITCHING AND THE INTERNET" ISS. WORLD TELECOMMUNICATIONS CONGRESS. (INTERNATIONAL SWITCHING SYMPOSIUM),CA,TORONTO, PINNACLE GROUP, 1997, Seiten 549-560, XP000720563
- GUDAPATI K ET AL: "LOCAL TELEPHONE SERVICE FOR CABLE SUBSCRIBERS USING PACKET SWITCHEDACCESS" ISS. WORLD TELECOMMUNICATIONS CONGRESS. (INTERNATIONAL SWITCHING SYMPOSIUM),CA,TORONTO, PINNACLE GROUP, 1997, Seiten 325-329, XP000704483

## Beschreibung

Die Erfindung betrifft ein Verfahren zum Austausch von Signalisierungsinformationen für wenigstens eines über ein paketvermittlendes Netz vermittelbare Gesprächsverbindung zwischen Teilnehmern eines leitungsvermittelnden Netzes gemäß dem Oberbegriff des Patentanspruchs 1.

Es wird demnach von einer Netzkonstellation ausgegangen, wie sie beispielsweise aus einer Kundenbroschüre "EWSD goes Internet" der Siemens AG, Hofmannstr. 51, D-81359 München, veröffentlicht im Jahre 1997 mit der Sachnummer A50001-N2-P65-2-7600, Abbildung auf Seite 7 bekannt ist.

Demgemäß sind in einem leitungsvermittelnden Netz mindestens eine digitale Ursprungsvermittlungsstelle (Local exchange 2) und mindestens eine digitale Zielvermittlungsstelle (Local exchange 1) vorhanden, die jeweils direkt oder indirekt über wenigstens eine digitale Transitvermittlungsstelle mit einem Zugangsknoten (POP) verbunden sind oder in die die Funktionen eines solchen Zugangsknotens integriert sind. Solche Zugangsknoten ermöglichen den Anschluß der Ursprungs-, Zielund/oder Transitvermittlungsstellen an ein paketvermittelndes Netz z.B. an das Internet. Somit können Teilnehmer des leitungsvermittelnden Netzes, deren Endeinrichtungen an eine digitale Vermittlungsstelle (Ursprungs- bzw. Zielvermittlungsstelle) angeschlossen sind, eine Gesprächsverbindung zu einem weiteren Teilnehmer des leitungsvermittelnden Netzes über das paketvermittlende Netz z.B. mittels Voice over IP aufbauen.

Der Vorteil der Voice-over-IP-Telefonie liegt vor allem darin, daß über einen Nutzkanal für eine Gesprächsverbindung des herkömmlichen leitungsvermittelnden Netzes mit einer Übertragungsrate von beispielsweise 64 kbit/s nun durch Komprimierung der Sprache in Datenpakete ungefähr acht oder mehr Voice-over-IP-Gesprächsverbindungen gleichzeitig übermittelt werden können. Dies reduziert die von einem Netzbetreiber zu tragenden Kosten, so daß der Netzbetreiber den Teilnehmern, die eine Voice-over-IP-Gesprächsverbindungen nutzen, günstige Telefongebühren anbieten kann. Im Gegenzug müssen die Teilnehmer zu den Voice-over-IP-Gesprächsverbindungen eine gegenüber der herkömmlichen leitungsvermittelten Gesprächsverbindung eine verminderte Sprachqualität in Kauf nehmen.

Um eine solche Voice-over-IP-Gesprächsverbindung den Teilnehmern des leitungsvermittelnden Netzes zu ermöglichen, sind die zuvor erwähnten Ursprungs- bzw. Zielvermittlungsstellen mit einem Zugangsknoten zum Internet verbunden oder die Funktionen solcher Zugangsknoten sind in eine Ursprungs- bzw. Zielvermittlungsstelle integriert.

In einem solchen Zugangsknoten ist eine sogenannte Interworking Unit zur Umsetzung von Sprache über einen Nutzkanal des herkömmlichen leitungsvermittelnden Telefonnetzes (z.B. 64 kbit/s) in Sprache in Form von über das Internet zu übermittelnden Datenpaketen (Voice over IP = VOI) vorgesehen. Des weiteren sind folgende für VOI benötigte Funktionen innerhalb eines Zugangsknotens implementiert:
- eine Signalierungsfunktion zum Verbindungsaufbau bzw. -abbau, zur Realisierung von Telefondiensten (z.B. IN-Dienste) und zur Ermittlung der ausgehenden Übertragungsstrekke (z.B. ein Nutzkanal einer PCM-Strecke oder eine gewöhnliche Datenleitung). Die Signalisierungsinformationen werden ebenfalls in Datenpakete umgewandelt und über das Internet zur Zielvermittlungsstelle übertragen.
- eine Vergebührungsfunktion zur zeit- und zielabhängigen Vergebührung der VOI-Gesprächsverbindungen,
- eine Verkehrsleitfunktion zur Auswertung von Ziel-Rufnummern der herkömmlichen Telefonie (z.B. E.164) und zur Konvertierung derselben in eine Internet-Zieladresse.

Diese Vorgehensweise stellt deshalb eine ungünstige Lösung dar, weil die vorstehend genannten VOI-Funktionen innerhalb eines solchen Zugangsknotens zusätzlich zu den bereits in einer digitalen Ursprungs-, Ziel- bzw. Transitvermittlungsstelle vorhandenen Signalisierungs-, Vergebührungs- und Verkehrsleitfunktionen entwickelt werden müssen. Diese Lösung ist damit entwicklungsintensiv, teuer und erfordert eine doppelte Wartung. Außerdem gibt es derzeit kein für alle Netzbetreiber verbindliches standardisiertes Signalisierungsverfahren von VOI-Gesprächsverbindungen.

In der Druckschrift World Telecommunications Congres, "Convergence between public swiching and the internet", Schoen U. et al, Toronto, 1997, Seiten 549-560 ist eine Kommunikationsanordnung beschrieben, bei dem Gesprächsverbindungen von analogen Teilnehmern eines PSTN über das Internet geführt werden können. Hierbei ist eine Terminierung der Nutz- und Signalisierungsinformationen in dem jeweiligen Kommunikationsnetz vorgesehen.

Des weiteren ist aus der WO 97/38551 ein Verfahren zum Vermitteln von Internet-Verbindungen bekannt, bei dem von Teilnehmern des PSTN eingeleitete Internet-Verbindungen zum frühest möglichen Zeitpunkt an das Internet oder ein Zubringernetz - beispielsweise ein ATM-Kommunikationsnetz - vermittelt werden. Hierdurch wird die Überlastung der Verbindungsleitungen im PSTN durch zu vermittelnde Internet-Verbindungen erheblich reduziert.

Die Aufgabe der Erfindung besteht daher darin, ein Verfahren der im Oberbegriff des Patentanspruchs 1 angegebenen Art dahingehend auszugestalten, daß die vorstehend erläuterten Nachteile beseitigt werden.

Diese Aufgabe wird durch die im Kennzeichen des Anspruchs 1 angegebenen Merkmale gelöst. Weitere Ausgestaltungen der Erfindung sind in Unteransprüchen gekennzeichnet.

Das Prinzip der Erfindung besteht darin, daß die zu einer über das paketvermittelnde Netz zu übermittelnden Gesprächsverbindung (z.B. VOI) gehörende Signalisierungsinformationen anstatt über das paketvermittelnde Netz über ein mit dem herkömmlichen leitungsvermittelnden Netz in Verbindung stehenden Signalisierungsnetz zwischen einer Ursprungs- und Zielvermittlungsstelle des leitungsvermittelnden Netzes ausgetauscht werden.

Ermöglicht wird dies aufgrund des Umstandes, daß die Signalisierungsfunktion zum Verbindungsaufbau bzw. -abbau und zur Realisierung von Telefondiensten (z.B. automatischer Rückruf) in den digitalen Vermittlungsstellen, also in den Ursprungs-, Ziel- bzw. Transitvermittlungsstellen, bereits implementiert sind. Außerdem verfügt das herkömmliche leitungsvermittelnde Netz über ein standardisiertes eigenständiges Signalisierungsnetz, vorzugsweise CCS7. Erfindungsgemäß wird das für das leitungsvermittelnde Netz zur Verfügung stehende Signalisierungsnetz in vorteilhafter Weise für den Austausch von Signalisierungsinformationen bzgl. der über das paketvermittelnde Netz zu übermittelnden Gesprächsverbindungen ausgenutzt.

Damit ist eine aufwendige Entwicklung einer speziellen Signalisierungsfunktion für Gesprächsverbindungen über das paketvermittelnde Netz beispielsweise über das Internet hinfällig. Ferner ist die Signalisierungsfunktion in einer Vermittlungsstelle eines leitungsvermittelnden Netzes bereits standardisiert, so daß Signalisierungsinformation zwischen Vermittlungsstellen verschiedener Netzbetreiber bzw. Herstellern ausgetauscht werden können.

Ein zusätzlicher Vorteil der Erfindung ist darin zu sehen, daß der das paketvermittelnde Netz normalerweise stark belastende Verkehr an Signalisierungsinformationen auf das mit dem leitungsvermittelnden Netz in Verbindung stehenden Signalisierungsnetz verlagert und dadurch das paketvermittelnde Netz entlastet wird.

Gemäß einer vorteilhaften Weiterbildung der Erfindung werden die über das paketvermittelnde Netz zu übertragenden Nutzinformationen und ihre zugehörigen über das Signalisierungsnetz zu leitenden Signalisierungsfunktionen mit einer gemeinsamen eindeutigen Identifikationsnummer versehen. Dadurch können in der Vermittlungsstelle die über das Signalisierungsnetz übertragenen Signalisierungsinformationen in einfacher Weise mit den über das paketvermittelnde Netz übermittelten Nutzinformationen assoziiert werden.

Eine weitere vorteilhafte Ausgestaltung der Erfindung sieht vor, daß durch solche über das Signalisierungsnetz geleitete Signalisierungsinformationen auch das Vergebührungsverfahren des leitungsvermittelnden Netzes auf eine solche über das paketvermittelnde Netz hergestellte Gesprächsverbindung angewendet werden kann. Auf diese Weise kann die Gebührenabrechnung für Gesprächsverbindungen über das leitungsvermittelnde Netz und für solche über das paketvermittelnde Netz aufgebauten Gesprächsverbindungen vereinheitlicht werden und somit der administrative Aufwand verringert werden. Außerdem weist das Vergebührungsverfahren des leitungsvermittelnden Netzes ein hohes Maß an Sicherheit (z.B. die Verhinderung von Gebührenverlusten) auf, das automatisch gemäß dieser erfindungsgemäßen Ausgestaltung auch bei der Vergebührung von Gesprächsverbindungen über das paketvermittelnde Netz zur Geltung kommt.

Eine vorteilhafte Weiterbildung der Erfindung betrifft den Fall, daß zwischen den zu einer Ursprungsvermittlungsstelle gehörenden Zugangsknoten und einem weiteren zu einer Zielvermittlungsstelle gehörenden Zugangsknoten oder alternativ zwischen der Ursprungsvermittlungsstelle und der Zielvermittlungsstelle, in die die Funktionen eines solchen Zugangsknotens integriert sind, eine Direktverbindung besteht. D.h. die Datenpakete einer über das paketvermittelnde Netz zu übermittelnden Gesprächsverbindung werden ohne Zwischenknoten innerhalb des paketvermittelnden Netzes zwischen zwei Vermittlungsstellen übertragen. Unter dieser Voraussetzung kann die in der Ursprungsvermittlungsstelle vorhandene Verkehrsleitfunktion auch für die Verkehrsleitung der zu einer Gesprächsverbindung gehörenden Nutzinformationen in Form von Datenpaketen und der über das Signalisierungsnetz zu übermittelnde Signalisierungsinformationen genutzt werden.

Nachstehend wird ein Ausführungsbeispiel der Erfindung unter Bezugnahme auf eine Zeichnung näher beschrieben.

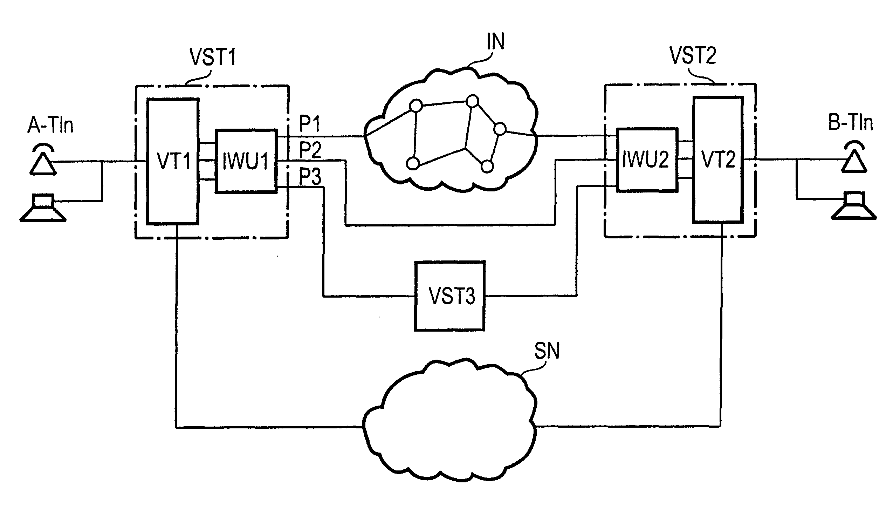

Die Figur zeigt eine Netzkonstellation, auf die das erfindungsgemäße Verfahren angewendet werden kann.

An eine digitale Vermittlungsstelle VST1, die im folgenden als Ursprungsvermittlungsstelle bezeichnet wird, sind Endeinrichtungen A-Tln z.B. ein Telefonapparat eines Teilnehmers eines leitungsvermittelnden Netzes angeschlossen. Innerhalb der Urspungsvermittlungstelle sind Vermittlungsfunktionen VT1 wie z.B. Signalisierung, Vergebührung und Verkehrsleitung implementiert. Ferner ist eine sogenannte Interworking Unit IWU1 in die Ursprungsvermittlungsstelle integriert, in der die Umsetzung von Sprache über einen Nutzkanal des herkömmlichen leitungsvermittelnden Netzes mit einer Übertragungsrate von beispielsweise 64 kbit/s in Sprache in Form von Datenpaketen variabler oder fester Länge geschieht.

Entsprechendes gilt für eine digitale Vermittlungsstelle VST2, die nachstehend als Zielvermittlungsstelle bezeichnet wird. Die an die Vermittlungsstelle VST2 angeschlossenen Endeinrichtungen eines weiteren Teilnehmers des leitungsvermittelnden Netzes sind mit B-TLN, die in der VST2 implementierten Vermittlungsfunktionen mit VT2 und die Interworking Unit mit IWU2 gekennzeichnet.

Zwischen der Ursprungsvermittlungsstelle VST1 und der Zielvermittlungsstelle VST2 sind mehrere Verbindungen angedeutet. Zum einen stehen die Ursprungs- und Zielvermittlungsstelle über ein Signalisierungsnetz SN (z.B. CCS7) in Verbindung. Zum anderen gehen von der Ursprungsvermittlungsstelle mehrere Nutzkanäle bzw. Leitungen für Nutzinformationen z.B. p1, p2 und p3 aus. In der Figur führt der Nutzkanal bzw. die Leitung p1 in ein paketvermittelndes Netz IN z.B. dem Internet oder einem ATM-Netz (Asynchronous Transfer Mode), das in Form einer Wolke und darin enthaltenen Knoten z.B. in Form von Netzwerkrechnern mit Hilfe von miteinander verbundenen Kreisen angedeutet ist, und führt von dort in die Zielvermittlungsstelle VST2. Der mit p2 bezeichnete Nutzkanal bzw. die Leitung stellt eine Direktverbindung zwischen der Ursprungs- und der Zielvermittlungsstelle dar. Mit Hilfe des Nutzkanals bzw. der Leitung p3 kann über eine weitere digitale Vermittlungsstelle VST3, die die Aufgaben einer Transitvermittlungsstelle wahrnimmt, eine Verbindung zur Zielvermittlungsstelle hergestellt werden. Eine Transitvermittlungsstelle weist normalerweise keine Teilnehmeranschlüsse auf und wird zwischen zwei Vermittlungsstellen mit Teilnehmeranschlüssen geschaltet. Zusätzlich steht die Transitvermittlungsstelle mit dem Signalisierungsnetz in Verbindung.

Die vorstehend geschilderten Verbindungsmöglichkeiten zweier digitalen Vermittlungsstellen können in Kombination zueinander stehen oder als Alternativen angesehen werden.

Angenommen ein A-Teilnehmer möchte mit seiner Endeinrichtung z.B. A-Tln eine paketvermittelte Gesprächsverbindung z.B. Voice over IP oder Voice over ATM zu einem B-Teilnehmer mit der Endeinrichtung z.B. B-Tln aufbauen.

Um einen Verbindungsaufbau zu initialisieren, löst der A-Teilnehmer mit einer Endeinrichtung z.B. A-Tln einen Schleifenschluß aus und wählt die Rufnummer (z.B. E.164) des B-Teilnehmers. Die in den Vermittlungsfunktionen VT1 implementierte Signalisierungsfunktion übermittelt nun über das Signalisierungsnetz Signalisierungsinformationen z.B. im CCS7-Format bzgl. des Verbindungsaufbauwunsches in Richtung zu der mit der gewählten Rufnummer adressierten Zielvermittlungsstelle z.B. VST2. Die zu der gewünschten Gesprächsverbindung gehörenden Signalisierungsinformation sind hierbei mit einer eindeutigen Identifikationsnummer versehen, die vorzugsweise im Datenteil der beispielsweise im CCS7-Format vorliegenden Signalisierungsinformation eingetragen ist. Die Zielvermittlungstelle sendet einen Ring-Ton zu einer Endeinrichtung z.B. B-Tln des B-Teilnehmers. Der B-Teilnehmer nimmt das Gespräch entgegen. Dies wird der Zielvermittlungsstelle VST2 mitgeteilt und die in den Vermittlungsfunktionen VT2 implementierte Signalisierungsfunktion sendet entsprechende Signalisierungsinformationen über das Signalisierungsnetz zurück an die Ursprungsvermittlungsstelle.

Nach Eintreffen der zurückgesandten Signalisierungsinformationen in der Ursprungsvermittlungsstelle wird über eine weitere Funktion der Vermittlungsfunktion VT1 die VOI-Gesprächsverbindung z.B. in Form eines Nutzkanals oder einer geschalteten Leitung hergestellt.

Im einfachsten Fall wählt die in der Vermittlungsfunktion implementierte Verkehrsleitfunktion anhand der gewählten Rufnummer den Nutzkanal bzw. die Leitung z.B. p2 aus, der bzw. die über die Interworking Unit IWU1 direkt zur Zielvermittlungsstelle VST2 führt. Die Interworking Unit ist zuständig für die Umsetzung von Sprache über einen Nutzkanal des leitungsvermittelnden Netzes mit einer Übertragungsrate von beispielsweise 64 kbit/s in Sprache in Form von Datenpaketen. Ferner werden diese Datenpakete mit der gleichen Identifikatonsnummer wie ihre zugehörigen Signalisierungsinformationen versehen, um eine korrekte Zuordnung der Signalisierungsinformationen zu den über Nutzkanäle oder Leitungen gesendete Nutzinformationen zu gewährleisten. Die an der Zielvermittlungsstelle angekommene Sprache in Form von Datenpaketen wird mittels der Interworking Unit IWU2 wieder zurück in Sprache über einen Nutzkanal des leitungsvermittelnden Netzes umgewandelt und mit Hilfe der Vermittlungsfunktion VT2 in Richtung zur Endeinrichtung des B-Teilnehmers übertragen.

Alternativ dazu oder in Kombination mit dem vorstehend genannten Fall kann die in den Vermittlungsfunktionen VT1 implementierte Verkehrsleitfunktion die gewählte Rufnummer in eine Zieladresse des paketvermittelnden Netzes (Internetadresse) konvertiert und wählt anhand derer den Nutzkanal bzw. die Leitung z.B. p1 aus, über die mit Hilfe der Interworking Unit IWU1 eine Gesprächsverbindung zur Zielvermittlungsstelle via dem paketvermittelnden Netz IN (z.B. dem Internet) hergestellt wird. Die Behandlung und Weiterleitung der angekommenen Sprache in Form von Datenpaketen in der Zielvermittlungsstelle läuft analog zu dem zuvor erläuterten Verfahren ab.

Ferner kann die in den Vermittlungsfunktionen VT1 implementierte Verkehrsleitfunktion anhand der gewählten Rufnummer den Nutzkanal bzw. die Leitung z.B. p3 auswählen, die nicht direkt sondern über eine Transitvermittlungsstelle VST3 zur Zielvermittlungsstelle führt. Um die Nutz- bzw. Gesprächsverbindung in der Transitvermittlungsstelle durchschalten zu können, erhält die Transitvermittlungsstelle Signalisierungsinformationen der vorstehend angegebenen Art sowohl von der Ursprungsvermittlungsstelle als auch von der Zielvermittlungsstelle.

Außerdem kann nach Eintreffen von von der Ziel- bzw. Transitvermittlungsstelle herkommenden Signalisierungsinformationen in der Ursprungsvermittlungsstelle durch die in der Vermittlungsfunktion VST1 implementierte Vergebührungsfunktion ein Gebührenzähler angestoßen werden.

Ein Verfahren zum Verbindungsabbau bzw. zur Realisierung von Telefondiensten wie z.B. automatischer Rückruf kann analog zu der vorstehend beschriebenen Vorgehensweise ablaufen.

## Patentansprüche

1. Verfahren zum Austausch von Signalisierungsinformationen für wenigstens eine über ein paketvermittelndes Netz vermittelbare Gesprächsverbindung zwischen Teilnehmern eines leitungsvermittelnden Netzes, in dem mindestens eine digitale Ursprungsvermittlungsstelle (VST1) und mindestens eine digitale Zielvermittlungsstelle (VST2) vorhanden sind, die jeweils direkt oder indirekt über wenigstens eine digitale Transitvermittlungsstelle (VST3) mit einem Zugangsknoten verbunden sind oder in die die Funktionen eines solchen Zugangsknotens integriert sind, der für das leitungsvermittelnde Netz einen Zugang zum paketvermittelnden Netz bildet, wobei zwischen solchen Zugangsknoten die zu mindestens einer solchen Gesprächsverbindung gehörenden Signalisierungs- und Nutzinformationen in Form von Datenpaketen über das paketvermittelnde Netz übertragbar sind,
**dadurch gekennzeichnet, daß** solche Signalisierungsinformationen anstatt über das paketvermittelnde Netz über ein mit dem leitungsvermittelnden Netz in Verbindung stehenden Signalisierungsnetz (SN) zwischen einer solchen Ursprungs- und Zielvermittlungstelle ausgetauscht werden.

2. Verfahren nach Anspruch 1,
**dadurch gekennzeichnet, daß** die über das paketvermittelnde Netz zu übertragenen Nutzinformationen und ihre zugehörigen über das Signalisierungsnetz zu leitenden Signalisierungsinformationen mit einer gemeinsamen eindeutigen Identifikationsnummer versehen werden.

3. Verfahren nach einem der vorhergehenden Ansprüche,
**dadurch gekennzeichnet, daß** durch solche über ein Signalisierungsnetz (SN) geleitete Signalisierungsinformationen das Vergebührungsverfahren des leitungsvermittelnden Netzes auf eine solche über das paketvermittelnde Netz hergestellte Gesprächsverbindung angewendet wird.

4. Verfahren nach einem der vorhergehenden Ansprüche,
**dadurch gekennzeichnet, daß**, unter der Voraussetzung, daß zwischen den zu einer Ursprungsvermittlungsstelle (VST1) gehörenden Zugangsknoten und einem weiteren zu einer Zielvermittlungsstelle (VST2) gehörenden Zugangsknoten oder zwischen der Ursprungsvermittlungsstelle und der Zielvermittlungsstelle, in die die Funktionen eines solchen Zugangsknotens integriert sind, eine Direktverbindung (p2) besteht, die in einer Ursprungs- oder Transitvermittlungsstelle vorhandene Verkehrsleitfunktion auf die Verkehrsleitung der zu einer Gesprächsverbindung gehörenden Nutzinformationen in Form von Datenpaketen und über das Signalisierungnetz (SN) zu übermittelnde Signalisierungsinformationen angewendet wird.

## Claims

1. Method for exchanging signalling information for at least one call connection, which can be switched via a packet-switched network, between subscribers of a circuit-switched network which contains at least one digital originating exchange (VST1) and at least one digital destination exchange (VST2) which are in each case connected directly or indirectly via at least one digital transit exchange (VST3) to an access node or in which the functions of such an access node are integrated, which forms an access to the packet-switched network for the circuit-switched network, in which the signalling and useful information belonging to at least one such call connection can be transmitted via the packet-switched network between such access nodes in the form of data packets,
**characterized in that** such signalling information is exchanged between such an originating and destination exchange, instead of via the packet-switched network, via a signalling network (SN) connected to the circuit-switched network.

2. Method according to Claim 1, **characterized in that** the useful information to be transmitted via the packet-switched network, and its associated signalling information to be conducted via the signalling network, are provided with a common, unambiguous identification number.

3. Method according to one of the preceding claims, **characterized in that** the billing method of the circuit-switched network is applied to such a call connection established via the packet-switched network by means of such signalling information conducted via a signalling network (SN).

4. Method according to one of the preceding claims, **characterized in that**, assuming that a direct connection (p2) exists between the access nodes belonging to an originating exchange (VST1) and a further access node belonging to a destination exchange (VST2) or between the originating exchange and the destination exchange, in which the functions of such an access node are integrated, the traffic control function present in an originating or transit exchange is applied to the traffic control of the useful information, belonging to a call connection, in the form of data packets and signalling information to be transmitted via the signalling network (SN).

## Revendications

1. Procédé permettant d'échanger des informations de signalisation, destiné à au moins une communication, pouvant être commutée par un réseau à commutation de paquets, entre des abonnés d'un réseau à commutation de circuits, dans lequel au moins un centre numérique de commutation d'origine (VST1) et au moins un centre numérique de commutation de destination (VST2) sont présents, ceux-ci étant respectivement connectés de manière directe ou indirecte à un noeud d'accès au moyen d'au moins un centre numérique de commutation de transit (VST3) ou dans lesquels sont intégrées les fonctions d'un tel noeud d'accès qui forme un accès vers le réseau à commutation de paquets pour le réseau à commutation de circuits, les informations de signalisation et les informations utiles appartenant au moins à une telle communication étant transmissibles entre de tels noeuds d'accès, sous forme de paquets de données, par l'intermédiaire du réseau à commutation de paquets,
**caractérisé en ce que** de telles informations de signalisation, au lieu d'être échangées par l'intermédiaire du réseau à commutation de paquets, sont échangées entre un tel centre de commutation d'origine et un centre de commutation de destination par l'intermédiaire d'un réseau de signalisation (SN) se trouvant en connexion avec le réseau à commutation de circuits.

2. Procédé selon la revendication 1,
**caractérisé en ce que** les informations utiles à transmettre par l'intermédiaire du réseau à commutation de paquets ainsi que leurs informations de signalisation afférentes à transférer au moyen du réseau de signalisation sont munies d'un numéro commun d'identification univoque.

3. Procédé selon l'une quelconque des revendications précédentes,
**caractérisé en ce que** le procédé de taxation du réseau à commutation de circuits est appliqué à une communication établie par l'intermédiaire du réseau à commutation de paquets, au moyen de telles informations de signalisation transférées par l'intermédiaire d'un réseau de signalisation (SN).

4. Procédé selon l'une quelconque des revendications précédentes,
**caractérisé en ce que**, à la condition qu'entre les noeuds d'accès appartenant à un centre de commutation d'origine (VST1) et un autre noeud d'accès appartenant à un centre de commutation de destination (VST2) ou entre le centre de commutation d'origine et le centre de commutation de destination, dans lesquels les fonctions d'un tel noeud d'accès sont intégrées, il y a une liaison directe (p2), la fonction de contrôle du trafic présente dans un centre de commutation d'origine ou de transit est appliquée au circuit de trafic des informations utiles, appartenant à une communication, sous forme de paquets de données et des informations de signalisation à transmettre par l'intermédiaire du réseau de signalisation (SN).
